# EUROPÄISCHE PATENTSCHRIFT

(11) **EP 2 421 916 B1**
(45) Veröffentlichungstag und Bekanntmachung des Hinweises auf die Patenterteilung: **06.11.2013**
(21) Anmeldenummer: 10718916.9
(22) Anmeldetag: 16.04.2010
(51) Int. Cl.: C08L 23/12, C08L 23/16, C08J 3/24

(54) **VERFAHREN ZUR HERSTELLUNG THERMOPLASTISCHER POLYMERCOMPOUNDS**
METHOD FOR THE MANUFACTURE OF THERMOPLASTIC POLYMERCOMPOUNDS
PROCÉDÉ DE FABRICATION DES COMPOSÉS POLYMÈRES THERMOPLASTIQUES

(30) Priorität: 24.04.2009 DE 102009002642
(43) Veröffentlichungstag der Anmeldung: 29.02.2012
(73) Patentinhaber: Leibniz-Institut für Polymerforschung Dresden e.V., 01069 Dresden (DE)
(72) Erfinder: NASKAR, Kinsuk, Rishra Hooghly 712248 (IN); GOHS, Uwe, 01129 Dresden (DE); WIEßNER, Sven, 09123 Chemnitz (DE); LEUTERITZ, Andreas, 01187 Dresden (DE); WAGENKNECHT, Udo, 04509 Krostiz (DE); LEHMANN, Dieter, 01640 Coswig (DE); HEINRICH, Gert, 30163 Hannover (DE)
(74) Vertreter: Rauschenbach, Marion
(86) Internationale Anmeldenummer: PCT/EP2010/055022
(87) Internationale Veröffentlichungsnummer: WO 2010/121960

(56) Entgegenhaltungen:
- US-A1- 2006 003 126
- US-A1- 2006 004 142
- S. LOPEZ-QUINTANA, C. ROSALES, I. GOBERNADO-MITRE, J.C. MERINO, J.M. PASTOR: "Effect of beta-irradiation on mechanical propeties of metallocene elastomers/PA6 blends" POLYMER, Bd. 45, 28. September 2004 (2004-09-28), Seiten 8041-8050, XP002592413 DOI: 10.1016/j.polymer.2004.08.039
- ZUGA M D ET AL: "Products of Ethylene-Propylene Terpolymer Rubber (EPDM) Obtained by an Environmentally Friendly Process" ADVANCED MATERIALS RESEARCH, TRANS TECH PUBLICATIONS LTD, CH LNKD- DOI:10.4028/WWW.SCIENTIFIC.NET/AMR.23.333, Bd. 23, 1. Oktober 2007 (2007-10-01), Seiten 333-336, XP009136326 ISSN: 1022-6680

## Beschreibung

Die Erfindung bezieht sich auf die Gebiete der Chemie und der Verfahrenstechnik und betrifft ein Verfahren zur Herstellung von thermoplastischen Polymercompounds (z. B. Thermoplastische Vulkanisate) aus mindestens zwei verschiedenen Polymeren (z. B. Thermoplast und Elastomer) mit gegebenenfalls polymerisierbaren Monomeren, Füll- und Verstärkungsstoffen, Pigmenten sowie Additiven, die dann zu Formteilen verarbeitet und beispielsweise in der Autoindustrie, im Fahrzeugbau, in der Elektroindustrie zum Einsatz kommen können.

Zu den thermoplastischen Polymercompounds gehören auch die Thermoplastischen Vulkanisate (TPV). Diese bestehen aus einer harten und weichen Phase, wobei die weiche Phase mehr oder weniger vernetzt vorliegt. Die Eigenschaften von TPVs hängen von Anteil, Vernetzungsgrad, Größe und Dispergierung der partikulären Weichphase ab. Die elastischen Eigenschaften des TPV erfordern eine Phasenkopplung zwischen harter und weicher Phase und nehmen mit feinerer Verteilung und zunehmendem Vernetzungsgrad der Elastomerphase zu.

TPVs decken mit ihren Werkstoffeigenschaften ein weites Einsatzfeld von typischen Gummianwendungen bis in die Domäne der schlagzäh modifizierten Thermoplaste ab und eignen sich dabei besonders für alle dynamisch und semidynamisch beanspruchten Bauteile. Sie werden z. B. wegen der guten Rutschfestigkeit und bei entsprechender Thermoplast-Elastomer-Kombination wegen ihrer ausgezeichneten Ölbeständigkeit bevorzugt in Automobilanwendungen eingesetzt. Für Anwendungen im Automobilinnenraum sind TPV's mit geringem fogging und hoher Widerstandsfähigkeit der Oberflächen erforderlich. Diese Materialien basieren meist auf Polypropylen und einem feinverteilten, vollständig vernetzten Elastomer, wie z. B. Polyolefin-Elastomer.

Die gegenwärtige Herstellung der TPVs erfolgt mittels dynamischer Vulkanisation. Das heißt, während des Misch- und Dispergierprozesses erfolgt die "in situ Vernetzung" der elastomeren Phase. Der Begriff "Dynamische Vulkanisation" wurde in den grundlegenden Arbeiten von GESSLER (US 3,037,954 B) und FISCHER (US 3,835,201 B) geprägt und ab 1977 vor allem durch die Arbeiten von CORAN und PATEI (US 4,104,210 B, US 4,130,535 B, US 4,130,535 B) zur Herstellung kommerziell genutzter TPVs eingesetzt. In all diesen Fällen erfolgt die Initiierung der Vernetzungsreaktion der elastomeren Phase entweder mittels thermisch aktivierbarer Radikalbildner, z. B. Peroxiden, oder thermisch aktivierbaren Polymeren (z. B. Phenolharzen) oder thermisch aktivierbaren funktionellen Gruppen (z. B. reaktive Aminogruppen). Dabei sind Mischprozess, Wärmetransport und chemische Reaktion über komplexe Wechselwirkungen voneinander abhängig und Nebenreaktionen, wie z. B. der Abbau der Thermoplastmatrix, können oft nicht vermieden werden.

Die zunehmende gewerbliche Anwendung von TPVs in den verschiedensten technischen Bereichen, wie Fahrzeugindustrie, Schienenfahrzeugbau, Elektroindustrie und Gerätebau, erfordert Herstellungsverfahren, mit denen die TPVs in der gewünschten Qualität und mit Hilfe einfacher Fertigungsverfahren bereitgestellt werden können. TPVs sind heute nach einstufigen Verfahren in kontinuierlich arbeitenden Schneckenmischaggregaten, z. B. Gleichdralldoppelschneckenextruder, herstellbar. Dabei sind verschiedene Möglichkeiten der kontinuierlichen Dosierung der Kautschukkomponenten realisiert worden, wobei ein bekanntes Verfahren die Kautschukextrusion und reaktive Compoundierung vereint (Presseinformation der KraussMaffei Berstorff GmbH Hannover, 18.06.2008). Dies ist eine besonders interessante Lösung, da die üblicherweise in nicht rieselfähiger Form vorliegende Kautschukkomponente ohne weitere Vorbehandlungsschritte direkt als Streifen eingesetzt werden kann

In der Aufschmelzzone des Extruders werden die Hauptrezepturbestandteile, z. B. PP und EPDM, plastifiziert und vermischt. Gegebenenfalls erfolgt gleichzeitig die Einarbeitung von Zusatzstoffen (z. B. Reaktionsbeschleuniger, Füllstoff, UV-Schutz sowie eventuelle Farbstoffe). Es folgen Dispergier- und Homogenisierzonen, sowie weitere Mischzonen zur Einarbeitung von Prozessölen. Im vorletzten Verfahrensschritt erfolgt die Zugabe des chemischen Vernetzungsmittels (z. B. Peroxid), wobei die Verweilzeit und Mischwirkung der sich anschließenden Schneckenzone über Vernetzungsgrad und Phasenmorphologie der TPVs entscheidet. Im letzten Verfahrensschritt wird das TPV unter Vakuum entgast, bevor sich die Austragszone, gegebenenfalls unter Verwendung einer Zahnradpumpe als Austragsorgan, anschließt. Die Ausbildung der gewünschten Phasenmorphologie und die physikalischen Eigenschaften der TPVs werden maßgeblich durch den Schneckenaufbau und die in das Extrudat eingebrachten Scher- und Dehnspannungen bestimmt. Dabei sind Verfahrenslängen von deutlich über 50 UD (L/D beschreibt das Verhältnis von Schneckenlänge zu Schneckendurchmesser) (z. B. 57 L/D) erforderlich, damit alle notwendigen Prozessschritte in einer gezielten verfahrenstechnischen Abfolge durchgeführt werden können (Firmenschrift C0068/0904DE der Fa. Coperion Holding GmbH Stuttgart, 2004).

In der wissenschaftlichen Literatur wird auch über die Herstellung von TPVs auf PE/EPDM-Basis mit resolbasiertem Vernetzungssystem in einem vergleichsweise kurzen Doppelschneckenextruder mit 29 L/D berichtet, wobei alle Rezepturkomponenten gemeinsam in den Extrudereinzug dosiert wurden. Es konnte dabei festgestellt werden, dass die für das Eigenschaftsbild der TPVs notwendigen Schritte der dynamischen Vulkanisation, d. h. in-situ Vernetzung und Dispersion der Elastomerphase, aufgrund der effektiven Mischwirkung im Extruder bereits nach einer Verfahrenslänge von 15 UD abgeschlossen ist (M. van Duin, A.V. Machado, Polymer Degradation and Stability 90 ,2005, pp. 340-345). Über eine kommerzielle Umsetzung dieser Erkenntnisse wird nicht berichtet.

Im Stand der Technik wird über eine Vielzahl möglicher Thermoplast-Kautschuk-Kombinationen zur Herstellung von TPVs berichtet, so z. B. als Thermoplast Polypropylen (PP), Polyethylen (PE), Polyvinylchlorid (PVC), Polyethylenterephthalat (PET), Polyamide (PA) und als Elastomer beispielsweise Ethylen-Propylen-Dien-Kautschuk (EPDM), Natur-Kautschuk (NR), Nitrilkautschuk (NBR), Butylkautschuke (IIR), Halobutylkautschuke (XIIR) in Kombination mit polymerisierbaren Monomeren, Füll- und Verstärkungsstoffen (z. B. Fasern), Pigmenten und Additiven. Dabei ist anzumerken, dass auf dem Weg der radikalisch initiierten dynamischen Vulkanisation z. B. mittels Peroxiden, bevorzugt vernetzende Thermoplastmatrices, wie z. B. das unter kommerziellen und werkstofflichen Gesichtspunkten attraktive Polyethylen, bisher nicht verwendet werden können, da die Beschränkung der Vernetzungsreaktion auf die Weichphase bei Einsatz thermisch aktivierbarer Radikalbildner kaum sichergestellt werden kann.

Derzeit zeigen alle nach industriellen Prozessen hergestellten TPVs Begrenzungen bezüglich stofflicher als auch verfahrenstechnischer Parameter. So zieht die Verwendung von Phenolharzen als Vernetzungsmittel aufgrund deren Hygroskopizität die Notwendigkeit einer aufwändigen Materialtrocknung vor der reaktiven Compoundierung nach sich und aufgrund der ausgeprägten dunkelbraunen Eigenfärbung finden derartige TPVs nur ein begrenztes Einsatzfeld (DE 60 2004 005 499 T2). Diese Nachteile können zwar durch Anwendung des radikalisch initiierten Vernetzungsmechanismus' auf Basis organischer Peroxide umgangen werden, wobei jedoch die geringe Selektivität bei freien Radikalreaktionen zu einer Reihe unerwünschter Nebenreaktionen (z. B. Abbau bei PP, Vernetzung bei PE) in der Thermoplastmatrix führt, welche das Eigenschaftsbild derartiger TPVs stark beeinträchtigen können. Neben aufwändiger Maßnahmen zur Rezepturanpassung auf chemischem Wege - Einsatz von Coagenten auf Acrylat- oder Phenolbasis oder Verwendung multifunktioneller Peroxide - (DE 60 2004 005 499 T2), muss auch der Prozessführung bei der dynamischen Vulkanisation im Hinblick auf Temperaturführung, Mischsequenz und Verweilzeit besondere Beachtung geschenkt werden. Dabei erweist sich vor allem bei der unter verfahrenstechnischen und ökonomischen Gesichtpunkten zielführenden kontinuierlichen einstufigen TPV-Herstellung im Doppelschneckenextruder die Gewährleistung ausreichender Reaktionszeiten als Problem, dem nur durch eine konstruktive Vergrößerung der Prozesslänge oder eine Reduzierung des Durchsatzes begegnet werden kann. Während der ersten Lösung konstruktive Grenzen gesetzt sind, ist eine Durchsatzreduktion, d. h. Verringerung der möglichen Ausstoßleistung der Anlage, aus wirtschaftlicher Sicht nicht zielführend. Somit ist lediglich eine Verringerung der angesprochenen Nachteile durch die aufgeführten Möglichkeiten gegeben, ein vollständiges Vermeiden aufgrund der inhärenten Zerfallseigenschaften des radikalbildenden Peroxides mit temperatur- und konzentrationsabhängiger sowie nichtlinearer Radikalbildungsrate ist aber unmöglich.

Weiterhin sind Verfahren zur Polymermodifizierung mit energiereichen Elektronen bekannt, wie beispielsweise die Vernetzung von Polymeren (z. B. Thermoplaste, Elastomere), die Härtung von Reaktivharzsystemen zur Herstellung von Faser-Polymermatrix-Formteilen und die Funktionalisierung (z. B. PTFE). Diese Anwendungen beruhen z. T. auf einem räumlich und zeitlich präzisen Energieeintrag mittels energiereicher Elektronen zur Erzeugung angeregter Atome oder Moleküle sowie Ionen, die bevorzugt Radikale bilden und komplexe chemische Reaktionen induzieren. Im Ergebnis entsteht ein Polymer mit veränderten chemischen, elektrischen, mechanischen und thermischen Eigenschaften (A. Charlesby, Proc. Roy. Soc. A, 1952, vol. 215, pp. 187-214).

Es ist ein Verfahren zur Elektronenbestrahlung von binären oder ternären Blends aus Metallocenpolymeren und Polyamid-6 und Gummi bekannt (S. Lopez-Quintana, et al: Polymer, 45, (2004), 8041-8050). Die Blends werden mittels Compoundierung hergestellt, mittels Spritzgießens in Formteile überführt und Proben für die Tests aus den 2 mm dicken spritzgegossenen Platten abgeschnitten. Die spritzgegossenen Proben der reinen Polymere und ihre Blends werden in Luft mittels energiereicher Elektronen bestrahlt.

Weiterhin ist ein umweltfreundliches Verfahren zur Herstellung von Ethylen-Propylen-Dien-Gummi (EPDM) bekannt, bei dem aus dem EPDM und PVC ein Blend mittels bekannter Verfahren, wie dem Schmelzemischen, hergestellt und das Blend mittels einer elektrischen Laborpresse bei 160 °C in Folien gepresst und bestrahlt wird (M.D. Zuga, et al: Advanced Materials Research, Vol. 23,(2007), pp 333-336).

Aus US 2006/004142 A1 ist weiterhin ein Verfahren zum Aushärten von plastischen und elastischen Blends mittels Elektronenbestrahlung bekannt. Dabei erfolgt die Bestrahlung durch Positionierung einer festen Haftschicht auf einem Substrat (first layer) und Positionierung einer zweiten Schicht mit nachfolgender Bestrahlung.

Die Herstellung einer elektronenbestrahlten Polymerstruktur ist außerdem aus US 2006/0003126 A1 bekannt, bei der eine Mischung hergestellt, geformt und nachfolgend bestrahlt wird.

Die Vernetzung von Thermoplasten und Elastomeren mittels energiereicher Elektronen ist Stand der Technik und erfolgt bisher ausschließlich unter stationären Bedingungen (z. B. am Formteil, an Polymeren im fließfähigen Zustand). Vorteile der Vernetzung mit energiereichen Elektronen sind die Möglichkeit der Fertigung großer Bauteile ohne den Einsatz eines Autoklaven, eine erhöhte Energieeffizienz von bis zu 70 % (gegenüber dem thermischen Pressprozess), geringe Gasemission, kürzere Härtungszeiten, der Verzicht auf zusätzliche Radikalbildner und die Möglichkeit der kompletten Einbindung der verwendeten Materialien in das Netzwerk (Abaris, EB Curing Technology, Las Vegas, 1994; Norris, R., EB Curing of Composites Workshop, 1996).

Die Aufgabe der vorliegenden Erfindung besteht in der Angabe eines Verfahrens zur Herstellung thermoplastischer Polymercompounds mit dispers verteilten vernetzten Polymerpartikeln in einfacher und kostengünstiger Art und Weise.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Herstellung eines thermoplastischen Polymercompounds werden Materialien mindestens aus zwei verschiedenen Polymeren, wovon mindestens eines ein Thermoplast und mindestens eines ein vernetzendes Polymer ist, wobei weitere Stoffen zugegeben werden können, in schmelzflüssigem Zustand unter den dynamischen Mischbedingungen des Herstellungsprozesses einer örtlich und hinsichtlich der Intensität definierten Bestrahlung mittels energiereicher Elektronen ausgesetzt.

Vorteilhafterweise wird ein Polymer eingesetzt, das ein Elastomer ist.

Ebenfalls vorteilhafterweise werden zwei verschiedene Polymere eingesetzt, wobei das eine Polymer ein Elastomer und das andere Polymer ein Thermoplast ist.

Weiterhin vorteilhafterweise wird ein Polymer eingesetzt, das ein Elektronen härtbares Reaktivharz ist, wobei noch vorteilhafterweise als Elektronen härtbares Reaktivharz ein ungesättigtes Polyesterharz oder Polyesteracrylatharz oder Epoxyacrylatharz oder Urethanacrylatharz oder Aminoacrylatharz eingesetzt wird.

Und ebenfalls vorteilhafterweise werden als weitere Stoffe polymerisierbaren Monomeren, Füll- und Verstärkungsstoffen, Pigmenten sowie Additiven eingesetzt.

Vorteilhaft ist es auch, wenn die Bestrahlung mittels energiereicher Elektronen in einer reaktiven Gasumgebung und/oder an Luft durchgeführt wird.

Und auch vorteilhaft ist es, wenn energiereiche Elektronen mit einer Energie von 70 keV bis 10 MeV eingesetzt werden.

Weiterhin vorteilhaft ist es, wenn die Bestrahlung mittels energiereicher Elektronen mit Dosiswerten im Bereich von 2 kGy bis 250 kGy durchgeführt wird.

Ebenfalls vorteilhaft ist es, wenn die Bestrahlung mittels energiereicher Elektronen mit Dosisraten im Bereich von 0,1 kGy/U bis 500 kGy/U durchgeführt wird.

Und von Vorteil ist es auch, wenn die Bestrahlung mittels energiereicher Elektronen an mehreren verschiedenen Orten im Material und/oder im Herstellungsprozess durchgeführt wird.

Mit dem erfindungsgemäßen Verfahren ist es erstmals möglich, thermoplastische Polymercompounds mit dispers verteilten vernetzten Polymerpartikeln herzustellen, bei denen die Werkstoffmorphologie, wie der Vernetzungsgrad, Größe und Dispergierung der vernetzten Polymerpartikel, Phasenkompatibilisierung sowie Funktionalisierung, über den örtlich und hinsichtlich der Intensität definierten Energieeintrag mit pro Umdrehung eingebrachter Dosis, dem Behandlungsvolumen und der Gasatmosphäre definiert gesteuert werden kann. Dabei erfolgt der Energieeintrag unter den dynamischen Mischbedingungen des Herstellungsprozesses, wobei damit insbesondere die Scher- und Dehnbeanspruchungen gemeint sind. Die Bestrahlung kann dabei auch vor dem Einsetzen von Scher- und Dehnbeanspruchungen erfolgen, ist aber erfindungsgemäß nur erfolgreich, wenn danach unmittelbar die Scher- und Dehnbeanspruchungen realisiert werden.

Erfindungsgemäß werden die Ausgangsmaterialien zur Herstellung von TPVs mit energiereichen Elektronen während des Herstellungsprozesses beaufschlagt.

Als Ausgangsmaterialien werden mindestens zwei verschiedene Polymere eingesetzt, wovon mindestens eines ein Thermoplast und mindestens eines ein vernetzendes Polymer ist. Unter vernetzenden Polymeren sollen solche verstanden werden, die mittels Bestrahlung mit energiereichen Elektronen selbst vernetzbar sind oder unter Einsatz eines Vemetzungsadditivs vernetzen.

Als Polymere können neben einem Thermoplasten vor allem Elastomere als vemetzbare Polymere eingesetzt werden. Es können aber auch nur Thermoplaste eingesetzt werden, wobei von den mindestens zwei verschiedenen Thermoplasten dann immer ein Thermoplast mittels Bestrahlung mit energiereichen Elektronen vernetzbar sein muss.

Ebenfalls besteht erfindungsgemäß die Möglichkeit als Ausgangsstoffe solche Polymere einzusetzen, die allein mittels Bestrahlung mit energiereichen Elektronen nicht vernetzen, aber unter Zugabe eines Vernetzungsadditives vernetzen.

Die Vernetzung erfolgt erfindungsgemäß mittels der Bestrahlung mit energiereichen Elektronen. Dabei kann es sich um eine radikalische und/oder kationische Vernetzung handeln.

Erfindungsgemäß erfolgt die Bestrahlung der Ausgangsstoffe erst dann, wenn die Ausgangsstoffe sich im schmelzflüssigen Zustand befinden. Während der Bestrahlung werden angeregte Atome oder Moleküle sowie Ionen erzeugt, die bevorzugt Radikale bilden und komplexe chemische Reaktionen im behandelten Schmelzvolumen des Aufbereitungsprozesses induzieren. Als schmelzflüssiger Zustand soll im Rahmen dieser Erfindung der Zustand der Ausgangsstoffe verstanden werden, den sie während des Schmelzeverarbeitungsprozesses nach dem Stand der Technik üblicherweise erreichen, dass heißt, es muss keine weitere Temperatureintragung in den vorhandenen Herstellungsprozess erfolgen.

Hinzu kommt, dass durch die definierte Steuerbarkeit des Energieeintrages hinsichtlich des konkreten Ortes des zu modifizierenden Polymerschmelzevolumens und auch der Intensität (Intensität, dass heißt, die pro Umdrehung der Compoundiermaschine eingebrachte Dosis im modifizierten Polymerschmelzevolumen) des Energieeintrages erfindungsgemäß die Werkstoffmorphologie eingestellt und gesteuert wird.

Die Ausbildung der gewünschten Phasenmorphologie und die physikalischen Eigenschaften der TPVs werden im Wesentlichen durch den Schneckenaufbau und die in das Extrudat eingebrachten Scher- und Dehnspannungen bestimmt. Erfindungsgemäß erfolgt die Bestrahlung zeitnah zu den dynamischen Mischbedingungen des Herstellungsprozesses, wodurch die erfindungsgemäße Modifizierung bewirkt wird.

Durch die erfindungsgemäße Lösung wird in den bisherigen Herstellungsprozess für TPVs kein zusätzlicher Prozessschritt eingeführt, sondern es wird die thermisch induzierte Radikalbildung über zusätzliche Radikalbildner oder thermisch aktivierbare Polymere (z. B. Phenolharze) oder thermisch aktivierbare funktionelle Gruppen durch eine Elektronen induzierte Radikalbildung ausgetauscht.

Ein Vorteil der erfindungsgemäßen Lösung besteht darin, dass die Polymerradikale unabhängig von der Temperatur in einem wählbaren Behandlungsgebiet innerhalb der Materialmasse und/oder im Herstellungsprozess entsprechend den Erfordernissen der gewünschten chemischen Reaktion erzeugt werden können. Dies bedeutet, dass die chemische Reaktion nur in einem gezielt gewählten Gebiet innerhalb der Materialmasse ausgelöst werden kann. Es bedeutet aber auch, dass eine örtlich und/oder zeitlich sequentielle Bestrahlung in einer kontinuierlich oder diskontinuierlich arbeitenden Compoundiermaschine für Polymerschmelze erfolgen kann, wobei jedoch der schmelzflüssige Zustand des Materials bereits vorliegen muss. Beispielsweise kann die Bestrahlung in einem Extruder an jeder gewünschten Stelle des Extruders bei entsprechendem Aufbau von Zylinder und Schnecke im Bereich der Bestrahlungsorte durchgeführt werden, wobei jedoch der schmelzflüssige Zustand des Materials bereits vorliegen muss.

Dabei ist es erfindungsgemäß vorteilhaft, wenn die Bestrahlung mit energiereichen Elektronen im Schmelzeaufbereitungsprozess mit einer dem zu modifizierenden System angepassten Dosis (Dosis, d. h. absorbierte Energie pro Masseneinheit) pro Umdrehung realisiert wird. Der Energieeintrag wird dabei in Abhängigkeit von der stofflichen Zusammensetzung der Schmelze gewählt.

Ebenfalls vorteilhaft ist es, dass mit der erfindungsgemäßen Bestrahlung auch eine Steuerung der Werkstoffmorphologie durch den zeitlich und räumlich exakt steuerbaren Energieeintrag durch die energiereichen Elektronen realisiert werden kann. Damit können beispielsweise der Vernetzungsgrad, die Größe und Dispergierung der vernetzten Polymerpartikel, die Phasenkompatibilisierung sowie die Funktionalisierung der thermoplastischen Matrix weitgehend über die pro Umdrehung eingebrachte Dosis, das Behandlungsvolumen und die Gasatmosphäre gesteuert werden.

Ebenso vorteilhaft ist es, dass die Bestrahlung in einer reaktiven Gasumgebung und/oder an Luft und/oder im Vakuum durchgeführt werden kann.

Der besondere Vorteil der vorliegenden Lösung besteht nicht nur in der Vernetzung des elastomeren Phase sondern auch darin, dass mit dem Energieeintrag durch energiereiche Elektronen auch funktionelle Gruppen erzeugt werden können, die zu einer besseren Kompatibilität der Stoffsysteme und einer Erhöhung der Hydrophilie der Oberfläche führen.

Mit den neuerdings verfügbaren kompakten und leistungsfähigen Elektronenbeschleunigern ergibt sich nun auch die Möglichkeit, Polymeraufbereitung und Polymermodifizierung mit energiereichen Elektronen unter den dynamischen Bedingungen des Schmelzeaufbereitungsprozesses thermoplastischer Polymercompounds zu kombinieren, sowie einen kompakten Anlagenaufbau inklusive Abschirmung und die Integration in die Fertigungslinie in den verschiedensten technischen Bereichen zu realisieren.

Nachfolgend wird die Erfindung an drei Ausführungsbeispielen näher erläutert.

### Beispiel 1

Ein TPV bestehend aus einem Polypropylen-Homopolymer (50 Ma.-%) und einem Ethylen-Propylen-Dien-Kautschuk (EPDM; 50 Ma.-%) wird unter folgenden Bedingungen durch Bestrahlung mit Elektronen in einer Brabender-Knetkammer hergestellt:

| | |
|---|---|
| Aufbereitungszeit [Minuten] | : 16 |
| mittlere Aufbereitungstemperatur [°C] | : 175 ... 180 |
| Knetwellendrehzahl [Umdrehung/Min.] | : 45 |
| Elektronenenergie [MeV] | : 1,5 |
| Behandlungszeit [s] | : 60 |
| absorbierte Dosis [kGy] | : 50 |
| absorbierte Dosis pro Umdrehung [kGy/U] | : ∼ 11 |
| Gasatmosphäre | : Luft |

Anschließend wird das TPV zu einem Prüfstab verarbeitet (Pressen), an dem die nachfolgenden Eigenschaften ermittelt wurden:
- Reißdehnung [%] : 298 ± 35
- Zugfestigkeit [MPa] : 9,2 ± 0,3
- E-Modul [MPa] : 156 ± 8
- Gelgehalt [%, bezogen auf EPDM] : 128
- Größe der EPDM-Partikel [µm] : 0,2 ... 3

### Beispiel 2

Ein TPV bestehend aus einem Polypropylen-Homopolymer (50 Ma.-%) und einem Ethylen-Propylen-Dien-Kautschuk (EPDM; 50 Ma.-%) wird unter folgenden Bedingungen durch Bestrahlung mit Elektronen in einer Brabender-Knetkammer hergestellt:

| | |
|---|---|
| Aufbereitungszeit [Minuten] | : 16 |
| mittlere Aufbereitungstemperatur [°C] | : 175 ... 180 |
| Knetwellendrehzahl [Umdrehung/Min.] | : 45 |
| Elektronenenergie [MeV] | : 1,5 |
| Behandlungszeit [s] | : 60 |
| absorbierte Dosis [kGy] | : 100 |
| absorbierte Dosis pro Umdrehung [kGy/U] | : ∼ 22 |
| Gasatmosphäre | : Luft |

Anschließend wird das TPV zu einem Prüfstab verarbeitet (Pressen), an dem die nachfolgenden Eigenschaften ermittelt wurden:
- Reißdehnung [%] : 282 ± 28
- Zugfestigkeit [MPa] : 9,8 ± 0,2
- E-Modul [MPa] : 173 ± 20
- Gelgehalt [%, bezogen auf EPDM] : 130
- Größe der EPDM-Partikel [µm] : 0,2 ... 3

### Beispiel 3

Ein TPV bestehend aus einem Polypropylen-Homopolymer (50 Ma.-%) und einem Ethylen-Propylen-Dien-Kautschuk (EPDM; 50 Ma.-%) wird unter folgenden Bedingungen durch Bestrahlung mit Elektronen in einer Brabender-Knetkammer hergestellt:

| | |
|---|---|
| Aufbereitungszeit [Minuten] | : 16 |
| mittlere Aufbereitungstemperatur [°C] | : 175 ... 180 |
| Knetwellendrehzahl [Umdrehung/Min.] | : 45 |
| Elektronenenergie [MeV] | : 1,5 |
| Behandlungszeit [s] | : 15 |
| absorbierte Dosis [kGy] | : 100 |
| absorbierte Dosis pro Umdrehung [kGy/U] | : ∼ 90 |
| Gasatmosphäre | : Luft |

Anschließend wird das TPV zu einem Prüfstab verarbeitet (Pressen), an dem die nachfolgenden Eigenschaften ermittelt wurden:
- Reißdehnung [%] : 624 ± 41
- Zugfestigkeit [MPa] : 14,7 ± 0,5
- E-Modul [MPa] : 176 ± 3
- Gelgehalt [%, bezogen auf EPDM] : 125
- Größe der EPDM-Partikel [µm] : 0,04 ... 2

## Patentansprüche

1. Verfahren zur Herstellung eines thermoplastischen Polymercompounds bei dem Materialien mindestens aus zwei verschiedenen Polymeren, wovon mindestens eines ein Thermoplast und mindestens eines ein vernetzendes Polymer ist, wobei weitere Stoffen zugegeben werden können, in schmelzflüssigem Zustand unter den dynamischen Mischbedingungen des Herstellungsprozesses einer örtlich und hinsichtlich der Intensität definierten Bestrahlung mittels energiereicher Elektronen ausgesetzt werden.

2. Verfahren nach Anspruch 1, bei dem ein Polymer eingesetzt wird, das ein Elastomer ist.

3. Verfahren nach Anspruch 1, bei dem zwei verschiedene Polymere eingesetzt werden, wobei das eine Polymer ein Elastomer und das andere Polymer ein Thermoplast ist.

4. Verfahren nach Anspruch 1, bei dem ein Polymer eingesetzt wird, das ein Elektronen härtbares Reaktivharz ist, welches vorteilhafterweise ein ungesättigtes Polyesterharz oder Polyesteracrylatharz oder Epoxyacrylatharz oder Urethanacrylatharz oder Aminoacrylatharz ist.

5. Verfahren nach Anspruch 1, bei dem als weitere Stoffe polymerisierbaren Monomeren, Füll- und Verstärkungsstoffen, Pigmenten sowie Additiven eingesetzt werden.

6. Verfahren nach Anspruch 1, bei dem die Bestrahlung mittels energiereicher Elektronen in einer reaktiven Gasumgebung und/oder an Luft durchgeführt wird.

7. Verfahren nach Anspruch 1, bei dem energiereiche Elektronen mit einer Energie von 70 keV bis 10 MeV eingesetzt werden.

8. Verfahren nach Anspruch 1, bei dem die Bestrahlung mittels energiereicher Elektronen mit Dosiswerten im Bereich von 2 kGy bis 250 kGy durchgeführt wird.

9. Verfahren nach Anspruch 1, bei dem die Bestrahlung mittels energiereicher Elektronen mit Dosisraten im Bereich von 0,1 kGy/U bis 500 kGy/U durchgeführt wird.

10. Verfahren nach Anspruch 1, bei dem die Bestrahlung mittels energiereicher Elektronen an mehreren verschiedenen Orten im Material und/oder im Herstellungsprozess durchgeführt wird.

## Claims

1. Process for the production of a compounded thermoplastic polymer material in which materials at least made of two different polymers, of which at least one is a thermoplastic and at least one is a crosslinking polymer, where other substances can be added, are exposed in molten state under the dynamic mixing conditions of the production process to irradiation that is achieved by means of high-energy electrons and that has defined location and defined intensity.

2. Process according to Claim 1, which uses a polymer that is an elastomer.

3. Process according to Claim 1, which uses two different polymers where one of the polymers is an elastomer and the other polymer is a thermoplastic.

4. Process according to Claim 1, which uses a polymer that is an electron-beam-curable reactive resin, which is advantageously an unsaturated polyester resin or polyester acrylate resin or epoxy acrylate resin or urethane acrylate resin or amino acrylate resin.

5. Process according to Claim 1, which uses, as other substances, polymerizable monomers, fillers and reinforcing materials, pigments and additives.

6. Process according to Claim 1, in which the irradiation by means of high-energy electrons is carried out in a reactive gas environment and/or in air.

7. Process according to Claim 1, in which the energy of the high-energy electrons used is from 70 keV to 10 MeV.

8. Process according to Claim 1, in which the irradiation by means of high-energy electrons is carried out with dose values in the range from 2 kGy to 250 kGy.

9. Process according to Claim 1, in which the irradiation by means of high-energy electrons is carried out with dose rates in the range from 0.1 kGy/rev to 500 kGy/rev.

10. Process according to Claim 1, in which the irradiation by means of high-energy electrons is carried out at a plurality of different locations within the material and/or within the production process.

## Revendications

1. Procédé pour la production d'un compound polymère thermoplastique, dans lequel on expose des matériaux consistent en au moins deux polymères différents, dont au moins un est un thermoplaste et au moins un est un polymère réticulable, d'autres substances pouvant être ajoutées, à l'état fondu dans les conditions de mélange dynamique du processus de production, à une irradiation définie localement et en ce qui concerne l'intensité, au moyen d'électrons à haute énergie.

2. Procédé selon la revendication 1, dans lequel on utilise un polymère qui est un élastomère.

3. Procédé selon la revendication 1, dans lequel on utilise deux polymères différents, un polymère étant un élastomère et l'autre polymère étant un thermoplaste.

4. Procédé selon la revendication 1, dans lequel on utilise un polymère qui est une résine réactive durcissable au moyen d'électrons, qui est avantageusement une résine aminoacrylate ou résine uréthane-acrylate ou résine époxyacrylate ou résine polyesteracrylate ou résine polyester insaturée.

5. Procédé selon la revendication 1, dans lequel on utilise comme autres substances des monomères polymérisables, des charges et matières de renfort, des pigments ainsi que des additifs.

6. Procédé selon la revendication 1, dans lequel on effectue l'irradiation au moyen d'électrons à haute énergie dans un environnement gazeux réactif et/ou à l'air.

7. Procédé selon la revendication 1, dans lequel on utilise des électrons à haute énergie, ayant une énergie de 70 keV à 10 MeV.

8. Procédé selon la revendication 1, dans lequel on effectue l'irradiation au moyen d'électrons à haute énergie à des doses dans la plage de 2 kGy à 250 kGy.

9. Procédé selon la revendication 1, dans lequel on effectue l'irradiation au moyen d'électrons à haute énergie à des débits de doses dans la plage de 0,1 kGy/U à 500 kGy/U.

10. Procédé selon la revendication 1, dans lequel on effectue l'irradiation au moyen d'électrons à haute énergie en plusieurs points différents dans le matériau et/ou dans le processus de production.
